# EUROPEAN PATENT APPLICATION

(11) **EP 1 726 488 A1**
(43) Date of publication of application: **29.11.2006**
(21) Application number: 06252782.5
(22) Date of filing: 30.05.2006
(51) Int. Cl.: B60R 11/00

(54) **A device for supporting an object in a vehicle**

(30) Priority: 27.05.2005 GB 0510826
(71) Applicant: Olingschläger, Ralph, Romsey, Hampshire SO51 7NE (GB)
(72) Inventor: Olingschläger, Ralph, Romsey, Hampshire SO51 7NE (GB)
(74) Representative: Locke, Andrew Robert

(57) **Abstract**

A device (1) for supporting an object in a vehicle comprises a base (5) on which the object is placed in use, the base being supported by first support means (9) to enable pivotal movement of the base (5) about a first axis (11). The first support means (9) is supported by second support means (15) to enable pivotal movement of the base (5) about a second axis (19) perpendicular to the first axis (11), the second support means (15) being adapted to be attached to the vehicle.

The first and second support means (9, 15) enable the base (5) to pivot about two perpendicular axes (11,19) during movement of the vehicle which enables the base (5) to remain substantially horizontal in use, even if the attitude of the vehicle is not horizontal. Thus the pitch and roll effects of the vehicle are alleviated.

## Description

The present invention relates to a device for supporting an object in a vehicle and particularly but not exclusively relates to a device for supporting an object in for example a galley of a vehicle such as a boat or caravan or the like.

Galleys typically comprise various pieces of cooking and cleaning equipment such as, for example, an oven, a refrigerator, and a hob. Typically such equipment is similar in features and design to corresponding equipment found in domestic kitchens, albeit on a smaller scale.

Sometimes, such equipment includes additional features such as restraints of some type to resist dishes or the like moving around, or falling from, the piece of equipment during movement of the vehicle.

According to the invention there is provided a device for supporting an object in a vehicle, the device comprising a base on which the object is placed in use, the base being supported by first support means to enable pivotal movement of the base about a first axis, the first support means being supported by second support means to enable pivotal movement of the base about a second axis perpendicular to the first axis, the second support means being adapted to be attached to the vehicle.

The first and second support means enable the base to pivot about two perpendicular axes during movement of the vehicle which enables the base to remain substantially horizontal in use, even if the attitude of the vehicle is not horizontal. Thus the pitch and roll effects of the vehicle are alleviated.

Preferably the first and second support means comprise respective bars, the base being rotatably mounted on the first bar, the first bar being rotatably mounted on the second bar.

Preferably the second bar extends through a bore formed in the first bar.

Alternatively the second bar is mounted on a joint provided on the first bar.

Preferably the joint comprises a ball and socket joint.

Preferably the ends of the second bar extend beyond the periphery of the base so as to be attached to respective parts of the vehicle to allow, in use, some movement of the base relative to the vehicle.

Preferably the length of the second bar is adjustable.

Preferably the length of the second bar is telescopically adjustable.

Preferably the base comprises the base of a container having side walls upstanding from the base.

Preferably the container comprises four upstanding side walls.

Preferably the first bar is rotatably mounted between two opposed side walls of the container so that the first bar is internal of the container.

Preferably the second bar extends through slots formed in the other two opposed side walls of the container so that part of the second bar is internal of the container, and part of the second bar is external of the container. The slots are longer than the diameter of the parts of the second bar that extend through the slots so as to allow movement of the second bar along the length of the slots as the container rotates about the first pivot axis.

Preferably damping means are provided to damp movement about at least one axis.

Preferably damping means are provided to damp movement about the first and about the second axis.

Preferably each slot is provided with adjustment means to adjust the possible degree of movement of the second bar within the slots. This enables the degree of rotation of the base about the first axis to be increased or decreased.

Preferably the adjustment means comprises a slider in each slot, each slider being slidingly mounted for longitudinal movement along the respective slot so that the second bar can engage the slider during rotation of the base about the first axis to resist further movement of the second bar along the slot, the slider being provided with further adjustment means to adjust the position of the slider within the respective slot.

Preferably the further adjustment means comprises a screw thread on the slider to engage a screw thread provided on the container.

Other aspects of the present invention may include any combination of the features or limitations referred to herein.

The present invention may be carried into practice in various ways, but embodiments will now be described by way of example only with reference to the accompanying drawings in which:
**Figure 1** is a perspective view of a device in accordance with the present invention;
**Figure 2** is a part sectional front view of the device of Figure 1;
**Figure 3** is an enlarged side view of part of the device of Figures 1 and 2,
**Figure 4** is a perspective view of a modified device in accordance with the present invention, and
**Figure 5** is an enlarged side view of part of the device of Figure 4.

Referring to the Figures, a device 1 comprises an oblong container 3 comprising a planar base 5 and four upstanding side walls 7A to 7D. The walls 7A to 7D are illustrated as being relatively tall but could be any suitable height as desired.

The device 1 further comprises first support means comprising a first circular cross section bar 9 that extends between a pair of opposed side walls 7A, 7C of the container 3. The ends of the bar 9 are rotatably mounted to respective walls 7A, 7C using any suitable fixing which may be, for example, a socket type fixing or a rubber universal joint type fixing operative such that the ends of the bar 9 are torsionally supported between the walls 7A, 7C. The bar 9 is thus relatively free to rotate relative to the container 3 about a first pivot axis 11. The central region of the bar 9 is formed with a through bore 13 that extends transverse to the first pivot axis 11.

The device 1 further comprises second support means comprising a second bar 15 that extends across the container 3 transverse to the first bar 9. The ends of the second bar 15 extend through respective slots 17 formed in opposed side walls 7B, 7D of the container 3 so as to project from the container 3. The second bar 15 extends through the through bore 13 of the first bar 9 so as to be able to rotate relative to the container 3 and the first bar 9 about a second pivot axis 19 that is perpendicular to the first pivot axis 11.

Each slot 17 is approximately the width of the diameter of the second bar 15 but is significantly longer than the diameter of the second bar 15. This enables the ends of second bar 15 to slide up and down respective slots 17.

The length of the slots 17 primarily determines the degree of sliding movement possible within the slots 17 and thus the degree of pivotal movement possible about the first pivot axis 11. However, the device 2 further comprises adjustment means 21 to enable the degree of movement of the ends of the second bar 15 within the respective slots 17 to be adjusted.

The adjustment means 21 of each slot 17, comprises a rod 23 slidingly mounted within a vertical bore 24 in a respective container wall 7B, 7D. Part of the rod 23 extends into the slot 17 so as to be able to move along the length of the slot 17. The end of the rod 23 that is in the slot 17 is formed with a cup 25 that can cup around the second bar 15. The other end of the rod 23 projects upwardly from the top of respective wall 7B, 7D and comprises a handle 27. An intermediary part of the rod 23 is threaded 28 and engages corresponding threads formed in the vertical bore 24.

Thus by rotating the handle 27, the rod 23 can be moved up or down within the slot 17 so that the position of the cup 25 within the slot 17 is adjustable. The position of the cup 25 serves as a movement limiter to limit the movement of the ends of the second bar 15 within respective slots 17.

The ends of the second bar 15 are, in use, rotatably attached to respective fixed points within the vehicle galley 16 using any suitable fixings including for example a socket type bracket, or any other bracket or fixing means.

The length of the second bar 15 can be adjusted to compensate for different sizes of galley 16 and may comprise suitable length adjustment means such as, for example, a telescopic adjustment mechanism.

When so attached the second bar 15 can rotate about the first pivot axis 11 relative to the vehicle, but cannot move in any other direction. So the second bar 15 can move in response to one of the roll or pitch of the vehicle.

The first bar 9 is rotatably mounted perpendicular to the second bar 15 and the container 3 is supported by the first bar 9. Thus the container 3 hangs off the first bar 9 which hangs off the second bar 15 which hangs off the vehicle itself.

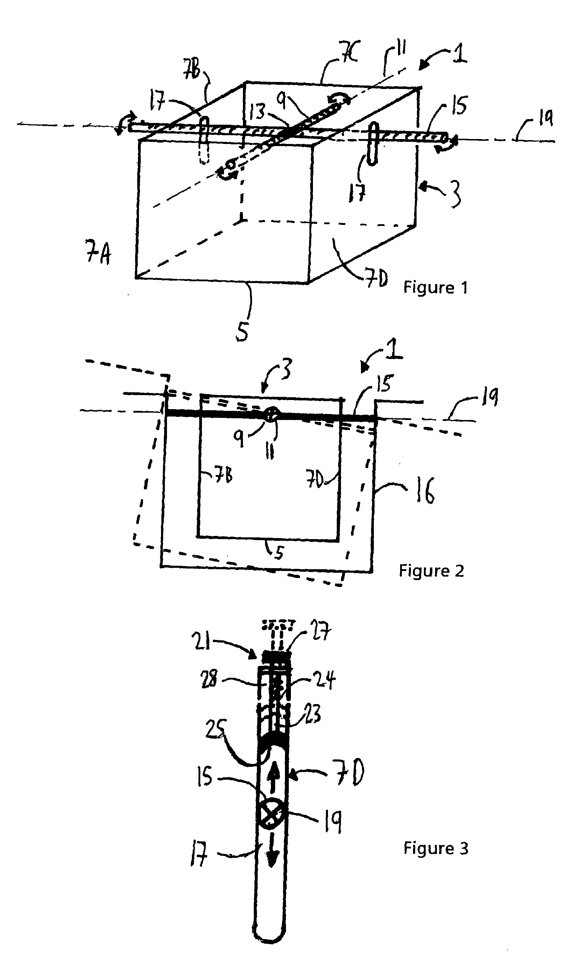

As can best be seen in Figure 2, as the vehicle rolls in a clockwise direction (the first pivot axis 11 being parallel with the longitudinal axis of the vehicle), the second bar 15, and the container 3, rotate about the first pivot axis 11 relative to the first bar 9 and relative to the vehicle itself so that the base 5 of the container 3 remains substantially horizontal. The ends of the second bar 15 move up and down respective slots 17

If the vehicle pitches forwardly or rearwardly the first bar 9, the container 3, and the second bar 15 all rotate about the second pivot axis 19 relative to the vehicle so that the base 5 of the container 3 remains substantially horizontal. This rotation about the second pivot axis 19 is enabled by the fixings used to rotatably attach the ends of the second bar 15 to the vehicle.

Thus the base 5 of the container 3 remains substantially horizontal even when the attitude of the vehicle is not horizontal. Thus any object placed on the base 5 also remains horizontal. Thus, for example, if the object is a dish of food or liquid, the food or liquid is less likely to spill. If the container 3 is a shallow container then the object does not slide off the container as the vehicle's attitude changes.

A locking mechanism can be provided to lock the container 3 at any desired angle relative to the first and second axes 11, 19. Such a mechanism could be used when, for example, a yacht has run aground or is moored in a storm where otherwise the container 3 would move around.

The device 1 may be modified so that the container side walls 7A to 7D are omitted altogether and the container 3 thus solely comprises a planar base 5. Arms can extend up opposed side margins of the base 5 for attachment to the first bar 9. In any case, the base 5 comprises a support element, which may be planar, on which an object to be stored is placed.

The device 1 could be used in any situation where it is desired to retain an object in a substantially horizontal position irrespective of the attitude of the vehicle. Thus the container 3 could comprise, for example, a heatable oven cavity in an oven, a refrigerated container in a refrigerator or freezer, a cleaning compartment of a sink or a dishwasher, or a stand for a kettle or bottle or mug or the like

The device 1 could be used on any suitable vehicle including for example, a ship, boat or yacht, a powered or towable caravan, a plane, a train or a submarine.

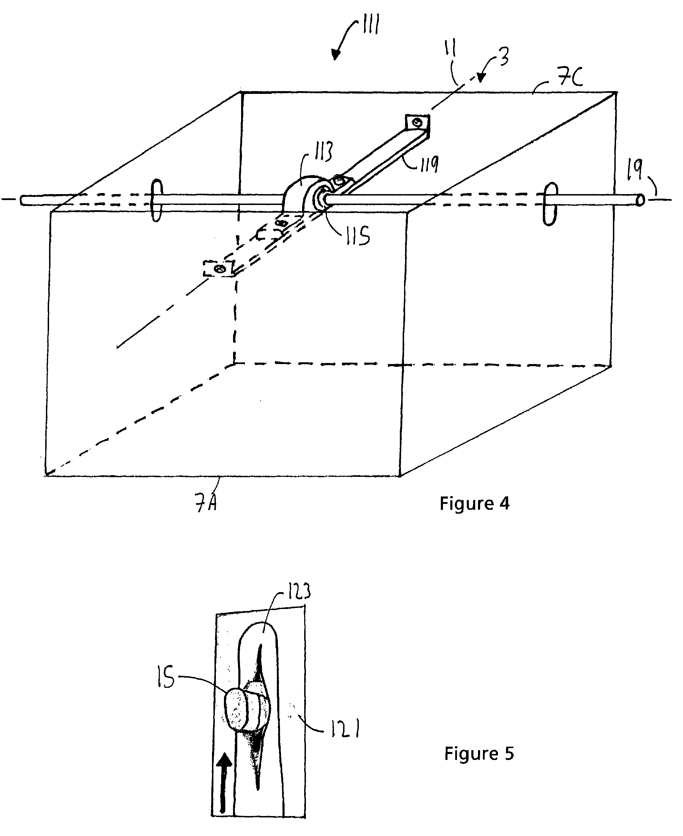

Referring to Figure 4, a modified device 111 is shown with like features being given like references.

In this embodiment the container 3 is attached to a first bar 119 which in this embodiment comprises a rectangular cross section bar 119, the ends of which are secured to the side walls 7A, 7C, of the container so as not to be able to rotate relative to the container 3.

A bracket 113 is mounted centrally on the bar 119 and houses a ball and socket joint 115. The second bar 15 extends through the ball and socket joint 115 such that rotation of the container 3 about first pivot axis 11 is possible by relative movement between the ball and socket of the joint 115 such that the ball can rotate about first pivot axis 11, within the socket.

Rotation about the second pivot axis 19 is achieved by the ball rotating about second pivot axis 19, within the socket.

Referring additionally to Figure 5 a slot 17 of the container 3 is shown with one end of the second bar 15 extending through the slot 7. The slot 7 is partially closed by a plate 121 which clamps a rubber gasket 123 between the plate and side wall 7D of the container 3. The second bar 15 extends through the gasket 123 which therefore acts as a motion clamper.

Any other suitable damping means may alternatively be provided.

## Claims

1. A device (1) for supporting an object in a vehicle, the device (1) comprising a base (5) on which the object is placed in use, the base (5) being supported by first support means (9) to enable pivotal movement of the base (5) about a first axis (11), the first support means (9) being supported by second support means (15) to enable pivotal movement of the base (5) about a second axis (19) perpendicular to the first axis (15), the second support means (15) being adapted to be attached to the vehicle.

2. The device (1) of claim 1 wherein the first and second support means comprise respective bars (9, 15), the base (5) being rotatably mounted on the first bar (9), the first bar (9) being rotatably mounted on the second bar (15).

3. The device (1) of claim 2 wherein the second bar (15) extends through a bore (13) formed in the first bar (9).

4. The device (1) of claim 2 wherein the second bar (15) is mounted on a joint (115) provided on the first bar (9).

5. The device (1, 111) of claim 4 wherein the joint (115) comprises a ball and socket joint.

6. The device (1, 111) of any one of claims 2 to 5 wherein the ends of the second bar (15) extend beyond the periphery of the base (5) so as to be attached to respective parts of the vehicle to allow, in use, some movement of the base (5) relative to the vehicle.

7. The device (1, 111) of any one of claims 2 to 6 wherein the length of the second bar (15) is adjustable.

8. The device (1, 111) of claim 7 wherein the length of the second bar (15) is telescopically adjustable.

9. The device (1, 111) of any one of the preceding claims wherein the base (5) comprises the base (5) of a container (3, 113) having side walls (7A to 7D) upstanding from the base (5).

10. The device (1, 111) of claim 9 wherein the container (3, 113) comprises four upstanding side walls (7A to 7D).

11. The device (1, 111) of claim 9 or claim 10 as dependent on any one of claims 2 to 8 wherein the first bar (9) is rotatably mounted between two opposed side walls (7A to 7D) of the container (3, 113) so that the first bar (9) is internal of the container (3, 113).

12. The device (1, 111) of any one of claims 9 to 11 wherein the second bar (15) extends through slots (17) formed in the other two opposed side walls (7A to 7D) of the container (3, 113) so that part of the second bar (15) is internal of the container (3, 113), and part of the second bar (15) is external of the container (3, 113).

13. The device (1, 111) of any one of the preceding claims wherein damping means (123) are provided to damp movement about at least one axis (11, 19).

14. The device (1, 111) of claim 13 wherein damping means (123) are provided to damp movement about the first and about the second axis (11, 19).

15. The device (1, 111) of claim 12 wherein each slot (17) is provided with adjustment means (21) to adjust the possible degree of movement of the second bar (15) within the slots (17).

16. The device (1, 111) of claim 15 wherein adjustment means (21) comprises a slider (23) in each slot (17), each slider (23) being slidingly mounted for longitudinal movement along the respective slot (17) so that the second bar (15) can engage the slider (23) during rotation of the base (5) about the first axis (11) to resist further movement of the second bar (15) along the slot (17), the slider (23) being provided with further adjustment means (21) to adjust the position of the slider (23) within the respective slot (17).

17. The device (1, 111) of claim 16 wherein the further adjustment means (21) comprises a screw thread (28) on the slider (23) to engage a screw thread (28) provided on the container (3, 113) .
